# EUROPÄISCHE PATENTSCHRIFT

(11) **EP 1 954 610 B1**
(45) Veröffentlichungstag und Bekanntmachung des Hinweises auf die Patenterteilung: **28.04.2010**
(21) Anmeldenummer: 06806551.5
(22) Anmeldetag: 26.10.2006
(51) Int. Cl.: B65G 65/48

(54) **VORRICHTUNG ZUR DOSIERTEN ENTNAHME VON SCHÜTTGUT**
DEVICE FOR THE METERED REMOVAL OF BULK MATERIAL
DISPOSITIF DE PRELEVEMENT DOSE DE MATIERE EN VRAC

(30) Priorität: 07.11.2005 DE 102005053352
(43) Veröffentlichungstag der Anmeldung: 13.08.2008
(73) Patentinhaber: Schenck Process GmbH, 64293 Darmstadt (DE)
(72) Erfinder: SCHWEIZER, Peter, 63225 Langen (DE); BREUNIG, Stefan, 65817 Eppstein (DE)
(74) Vertreter: Bill, Burkart Hartmut
(86) Internationale Anmeldenummer: PCT/EP2006/010307
(87) Internationale Veröffentlichungsnummer: WO 2007/051558

(56) Entgegenhaltungen:
- EP-A1- 0 536 714
- JP-A- 59 102 727

## Beschreibung

Die Erfindung betrifft eine Vorrichtung zur dosierten Entnahme von Schüttgut aus einem Behälter, der eine obere Schüttgut-Einfüllöffnung und eine untere Schüttgut-Entnahmeöffnung aufweist, mit einem Rotor, der mit wenigstens einem im Inneren des Behälters nahe dessen rotationssymmetrischen Boden angeordneten, zur Entnahmeöffnung gerichteten Räumarm antriebsmäßig verbunden ist.

In dem Dokument DE 39 42 558 A1 ist ein Silo mit einer Austragvorrichtung beschrieben, bei welcher über einem angetriebenen Räumarm eine Siebplatte angeordnet ist, welche von einem Arm einer Mitnehmervorrichtung kontinuierlich überstrichen wird. Eine Dosierung des dem Silo entnommenen Schüttgutes ist mit der bekannten Austragvorrichtung nicht möglich, weil eine erforderliche Brückenbildung des Schüttgutes über die gerade nicht überstrichenen Austragöffnungen nicht sichergestellt und außerdem materialabhängig ist.

Aus der Schrift DE 33 33 115 C2 ist ein mittels Räumgerät ausräumbarer Bunker bekannt, bei dem einer Verdichtung des Schüttgutes durch einen nach innen geneigten kegelartigen Behälterboden entgegegewirkt wird. Dabei unterstützt das Gefälle im Bereich des geneigten Bodens die Förderwirkung des Räumarmes und entspannt gleichzeitig das Schüttgut. Eine derartige Vorrichtung ist jedoch ungeeignet, unkontrollierten Ausfluß fluidisierten Materials zu verhindern.

Das Dokument DE 35 03 993 A1 schließlich offenbart eine Austragvorrichtung für ein Silo, bei welcher zur Vergrößerung des Durchflußwiderstandes gegenüber fließfähigen Massen eine Labyrinthabdichtung vorgesehen ist. Die Abdichtung schließt den Umfang eines zentralen Kegels und hält eine Labyrinthspalte lediglich im Bereich vor Ausräumarmen offen. Diese Anordnung ist jedoch darin nachteilig, dass zum Verdichten neigende Schüttgüter durch den langen Förderweg komprimiert und daher ungleichmäßig abgeworfen werden.

Die EP 0 536 714 A1 offenbart eine Austragsvorrichtung zur dosierten Schüttgutentnahme aus einem Behälter, mit einem Rotor, der über mehrere Räumarme verfügt, die nahe über dem rotationsymmetrischen Behälterbodens positioniert und zu einer seitlichen Entnahmeöffnung ausgerichtet sind. Die Räumarme sind an einem drehbaren Trennelement befestigt, das mit dem Rotor antriebsmässig verbundenen ist.

Der Erfindung liegt daher die Aufgabe zugrunde, eine Vorrichtung zur Entnahme von Schüttgut aus einem Behälter zu schaffen, bei der die Masse des entnommenen Schüttgutes nicht nur sehr genau dosiert werden kann, sondern die auch konstruktiv einfach und sehr gut wartungsfreundlich ist.

Bei der eingangs genannten Vorrichtung zur dosierten Entnahme von Schüttgut aus einem Behälter, der eine obere Schüttgut-Einfüllöffnung und eine untere Schüttgut-Entnahmeöffnung aufweist, sowie mit einem Rotor, der mit wenigstens einem im Inneren des Behälters nahe dessen rotationssymmetrischen Boden angeordneten, zur Entnahmeöffnung gerichteten Räumarm antriebsmäßig verbunden ist, sieht die Erfindung vor, dass der Räumarm an der Unterseite eines mit dem Rotor antriebsverbundenen Trennelementes befestigt ist, und dass unterhalb des Trennelementes vor dem Räumarm eine Beruhigungszone vorhanden ist, die zum Schüttgut nur über eine Einzugsöffnung offen ist.

Die Erfindung realisiert das Konzept der apparativen Trennung der Funktionen Beruhigen und Fördern vom nachströmenden Schüttgut. Hierdurch wird ein unkontrolliertes Ausfließen fluidisierten Schüttguts sowie eine Verdichtung desselben im Förderbereich vermieden. Dazu dient die erfindungsgemäße bis auf die Einzugsöffnung vollständige Absperrung der Beruhigungszone gegenüber nachströmendem Schüttgut, wodurch ein unkontrolliertes Ausfließen von Schüttgut zuverlässig vermieden wird. Eventuell verdichtetem Schüttgut wird in der Beruhigungszone die Möglichkeit zur Entspannung gegeben, so dass ein homogener, zeitlich konstanter und dosierter Schüttgutstrom den Behälter durch die Entnahmeöffnung verlässt. Die Schwankungsbreite oder Konstanz der Ist-Austragsleistung an Schüttgut beträgt etwa 0,5% der mittleren Ist-Austragsleistung. Darüber hinaus ist die Erfindung außerordentlich wartungsfreundlich, weil nur das Trennelement, das zweckmäßig als einfache Platte ausgeführt sein kann, aus dem Behälter zur Reinigung oder zum Austausch entnommen werden muss, um auch das Innere des Behälters beispielsweise bei Übergang zu einem Schüttgut anderer Art oder zur Wartung ohne weitere Behinderung, wie sie beispielsweise durch eine Austrag-Förderschnecke gegeben wäre, säubern zu können.

Die Erfindung kann vorwiegend in der Kunststoff-, Chemie-, Nahrungsmittel-, Waschmittel-, und der Pharmaindustrie eingesetzt werden.

Zweckmäßig ist die Einzugsöffnung an dem Trennelement ausgebildet. Für das Trennelement empfiehlt sich eine besonders einfache Gestaltung, gemäß welcher das Trennelement eine sich im Wesentlichen quer zur Mittellinie des Behälters erstreckende Platte ist, an welcher die Einzugsöffnung vorgesehen ist. Ferner empfiehlt es sich, dass die wirksame Fläche der Einzugsöffnung sich im Wesentlichen parallel zur Drehachse des Trennelementes erstreckt. Der Einzug des Schüttgutes wird erleichtert, wenn in Weiterbildung der Erfindung vor der Einzugsöffnung eine Einzugszone ausgebildet ist, längs welcher der Umfang des Trennelementes radial einwärts versetzt sein kann. Alternativ weist das Trennelement einen Durchbruch für die Einzugszone auf, welche dann vom Trennelement umgrenzt ist. Eine weitere Erleichterung des Einzugs eines definierten Schüttgutstranges durch die Einzugsöffnung wird erreicht, wenn das Trennelement an der Einzugsöffnung eine von seinem unteren Ende ansteigende Rampe aufweist, in der die Einzugsöffnung ausgebildet ist. Nicht eingezogenes Schüttgut wird durch die Rampe abgewiesen und stört somit nicht die Ausbildung eines homogenen Schüttgutstranges.

Wenn das erfindungsgemäße Trennelement die erwähnte Platte ist, wird die Absperrwirkung derselben dadurch verbessert, dass die Platte längs ihres Umfangs einen sich nach unten bis zum Boden erstreckenden Steg aufweist, wobei dann der Räumarm einenends an der Entnahmeöffnung enden und andemends in den Steg münden kann. Vorteilhafterweise kann dann wenigstens ein Abschnitt des spiraligen Räumarmes einen Teil des Steges bilden, der dann zweckmäßig die Einzugszone begrenzen kann. Zur weiteren Verbesserung der Absperrung der unterhalb des Trennelementes befindlichen Beruhigungszone und Förderzone kann am Rand des Trennelementes im Zusammenwirken mit der Behälterinnenwand ein Labyrinth etwa dadurch geschaffen sein, dass sich aus der Oberfläche des Trennelementes längs dessen Rand ein umlaufendes Profil erhebt, welches in einen umlaufenden Hinterschnitt in der Behälterinnenwand eingreift. Alternativ oder ergänzend können elastische Elemente wie etwa Federn vorgesehen sein, welche den Boden gegen einen die Beruhigungszone und die Förderzone umgrenzenden Rand des Trennelementes drücken.

Besonders hervorzuheben ist die Möglichkeit, das Trennelement so zu gestalten, dass ein auf dem Boden liegender und unter das drehende Trennelement eingezogener Schüttgutstrang zu dem Trennelement Abstand aufweist, also vom Trennelement, abgesehen vom erwünschten Fördern, nicht mitgenommen werden kann. Nach einer weiteren besonders vorteilhaften Weiterbildung der Erfindung sind an der Unterseite des Trennelementes mehrere Räumarme befestigt, die in Umfangsrichtung Abstand voneinander haben und mit unterschiedlichen Abständen vor dem Steg beginnen können. Damit wird es möglich, aus einem eingezogenen Schüttgutstrang bereits entspannte Randbereiche schon vor den in Umfangsrichtung nachfolgenden Räumarmen in die Entnahmeöffnung zu fördern. Durch die Aufteilung des eingezogenen Schüttgutstranges wird erreicht, dass die Beladung jedes einzelnen Räumarmes und damit die Verdichtung des Schüttgutstranges reduziert wird. Für einige Schüttgutarten kann es sich empfehlen, einen oder mehrere Räumarme jeweils mit einem definierten Durchlaß zu versehen, so dass der vom betreffenden Räumarm noch nicht zu fördernde weil noch nicht ausreichend beruhigte Anteil des Schüttgutstranges zu den nachfolgenden Räumarmen gelangen kann. Außerdem wird dadurch die Beladung jedes einzelnen Räumarmes reduziert, um einer Verdichtung des Schüttgutteilstranges entgegenzuwirken. Für eine präzise Wägung des Behälters während der Schüttgutentnahme empfiehlt es sich, die weiteren Räumarme an der Entnahmeöffnung mit in Umfangsrichtung gleichen Abständen enden zu lassen. Zweckmäßig haben alle Räumarme gleiche Spiralform.

Zur Restlosentleerung des Behälters sieht eine Weiterbildung der Erfindung vor, dass die Oberfläche des Trennelementes nach außen hin abfallend nach Art eines Konus gestaltet ist. Dadurch wird nicht nur die Restlosentleerung sondern auch der Schüttgutstrom zur Einzugszone unterstützt. Ferner kann vorteilhaft oberhalb des Trennelementes ein mit dem Behälter verbundener und sich radial, zweckmäßig horizontal ungefähr bis zur Drehachse des Trennelementes erstreckender Stator vorgesehen sein, welcher ein Mitdrehen des Schüttgutes mit dem Trennelement erschert. Wenn der Stator gebogen ist, fördert er auch innenliegendes Schüttgut nach außen in die Einzugszone. Wenn der erwähnte Konus bevorzugt separat vom Trennelement als statischer Einbau ausgeführt ist und sich über radiale Streben an der Behälterwand abstützt, können die Streben die Funktion des Stators übernehmen, so dass ein gesonderter Stator entfallen kann.

Weiterhin ist vorteilhaft, wenn zur Unterstützung des Schüttgutflusses oberhalb des Stators mindestens ein Rührelement vorgesehen ist, welches mit dem Trennelement mitdrehen kann. Es empfiehlt sich, das Rührelement der Einzugszone in Drehrichtung voreilen zu lassen, um deren Füllung zu verbessern.

Für die Einstellung des entnommenen Schüttgutstromes auf eine vorgegebene Soll-Austragleistung sieht eine Ausführungsform der Erfindung einen Regelkreis für einen steuerbaren Motor zum Antrieb des Trennelementes vor. Eine Waage, auf der der Behälter ruht, liefert das aktuelle Behältergewicht als Istsignal an einen Regler, der das empfangene Istsignal mit einem Zeitsignal aus einem Zeitglied zur Bildung eines Istaustragleistungssignals kombiniert und letzteres mit der vorgegebenen Sollaustragleistung vergleicht. Das Vergleichsergebnis ist das Stellsignal für die Drehzahl des Motors. Weiterhin ist es zweckmäßig, dass dann, wenn das Istsignal aus der Waage einem vorgegebenen Mindestbehältergewicht, das den kleinsten Füllgrad des Behälters repräsentiert, gleicht, die Einfüllöffnung des Behälters zu dessen Neubefüllung freigegeben wird.

Im Übrigen sind vorteilhafte Ausgestaltungen der Erfindung in den Unteransprüchen angegeben, die vornehmlich besonders vorteilhafte Gestaltungen des Trennelementes beinhalten und als selbstständiges Offenbarungsmittel anzusehen sind. Ein nicht beschränkendes Ausführungsbeispiel der Erfindung wird nachstehend anhand der beigefügten Zeichnung im Einzelnen beschrieben. Es zeigen:
Figur 1: eine schematische Seitenansicht einer mit den Merkmalen der Erfin-dung ausgerüsteten Vorrichtung zur dosierten Entnahme von Schüttgut;
Figur 2: eine schematische Seitenansicht eines plattenförmigen Trennelemen-tes aus der Vorrichtung nach Figur 1;
Figur 3: eine schematische Ansicht des Ausschnittes B aus Figur 2;
Figur 4: eine schematische Draufsicht auf das Trennelement aus der Vorrichtung nach Figur 1;
Figur 5: eine schematische Ansicht des Trennelementes aus Figur 4 von unten mit gepunktet dargestelltem Schüttgut;
Figur 6: eine schematische Ansicht von unten einer zweiten Ausführungsform des Trennelementes;
Figur 7: eine schematische Ansicht von unten einer dritten Ausführungsform des Trennelementes;
Figur 8 eine schematische perspektivische Darstellung des Trennelementes aus Figur 7;
Figur 9 eine schematische Ansicht eines Vertikalschnittes durch einen Teil des Behälters und des Trennelementes; und
Figur 10 eine schematische Draufsicht auf eine Einzelheit aus der Vorrichtung nach Figur 1.

Die Vorrichtung zur dosierten Entnahme von Schüttgut aus einem Vorratsilo 25 weist einen zylindrischen Behälter 1 beispielsweise aus Edelstahl auf, dessen obere Schüttgut-Einfüllöffnung 3 über einen Zwischenstutzen 26 mit einer Füllklappe 23 am Schüttgut-Auslauf des Vorratssilos 25 verbunden ist. Die Vorrichtung zur dosierten Entnahme kann einteiliger Bestandteil des Silos sein. Die Vorrichtung kann ferner eine selbständige Einheit in Form einer Differentialdosierwaage sein, die entweder von Hand oder über einen Kran oder dergleichen Geschirr mit Schüttgut durch die Einfüllöffnung 3 befüllt werden kann.

Im dargestellten Ausführungsbeispiel stützt sich der Behälter auf einer Waage ab, die hier mehrere Wägezellen 2, 32 aufweist. Außerhalb des Behälters 1, hier mittig oberhalb desselben, ist ein Antriebsmotor 4 angeordnet, dessen zentral in den Behälter hineinreichende Abtriebswelle 6 an ihrem freien Ende mittig ein Trennelement 5 trägt. Das von dem Motor 4 in Richtung des Pfeiles 33 angetriebene Trennelement 5 entnimmt aus dem Schüttgutvorrat im Behälter 1 von dessen Peripherie eine dosierte Menge an Schüttgut und fördert sie zu einer zentraler Abwurföffnung 7 im Boden 34 des Behälter 1, durch welche kontinuierlich ein dosierter Schüttgutstrom abgeworfen wird.

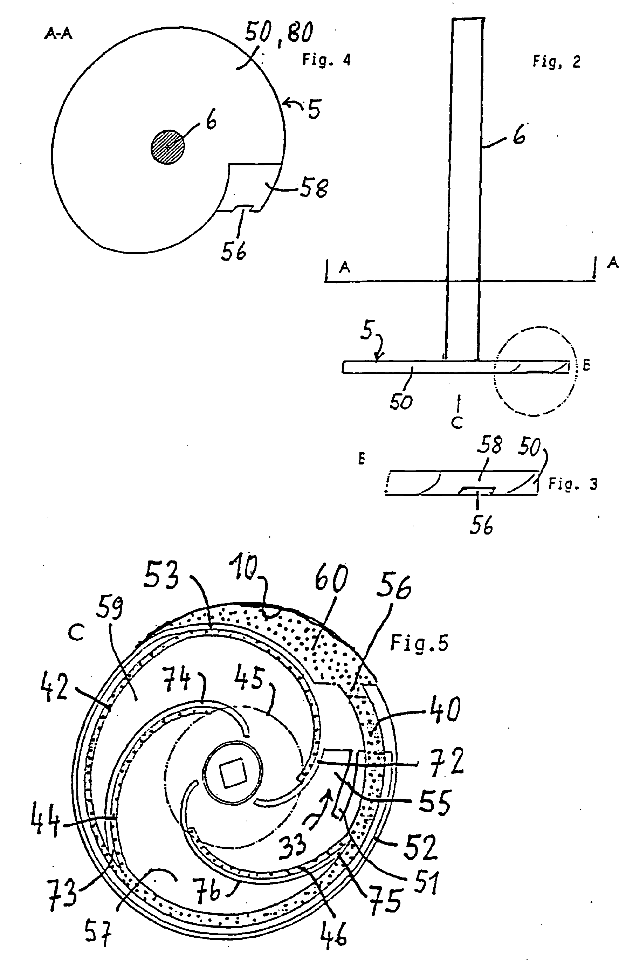

Gemäß Figuren 2 bis 5 hat das Trennelement 5 die Form einer runden Platte 50 mit glatter, im Wesentlichen planer Oberfläche, die sich quer zur Abtriebswelle 6 erstreckt und mit einer reibungsarmen Beschichtung versehen sein kann. Bis auf eine nachstehend noch erläuterte Einzugszone und Einzugsöffnung ist die Platte 50 kreisrund mit einem Durchmesser, der nur um wenige Zehntel Millimeter kleiner als der Innendurchmesser des Behälters ist. Jedenfalls schließt die Peripherie der Platte 50 bis auf die genannte Ausnahme so eng mit der Behälterinnenwand 10 ab, dass das Schüttgut nicht zwischen Platte 50 und Innenwand eindringen kann.

Die Platte 50 besitzt unterhalb ihrer Peripherie einen umlaufenden nach unten erhabenen Randsteg 52, der bis dicht über dem Boden 34 reicht und daher ebenfalls eine Sperre gegen das Eindringen von Schüttgut bildet. Der Steg 52 und die Unterseite der Platte 50 umschließen zusammen mit dem Boden 34 somit eine Beruhigungszone, die einerseits zum Schüttgut nur über eine Einzugsöffnung 56 und mittig über die Entnahmeöffnung 45 zu der Abwurföffnung 7 offen ist und im dargestellten Beispiel aus drei hintereinander entgegen der Drehrichtung 33 angeordneten Abschnitten 55, 57, 59 besteht, die nachstehend noch erläutert werden.

Um den Eintritt einer definierten Menge an Schüttgut in den ersten Abschnitt 55 der Beruhigungszone durch die Einzugsöffnung 56 zu ermöglichen; ist neben der Platte 50 eine Einzugszone 60 für das Schüttgut dadurch geschaffen, dass ein die Platte 50 begrenzender Abschnitt 53 des Steges von der Innenwand 10 und damit von der Peripherie der Platte 50 radial derart einwärts gebogen versetzt ist, dass sich die Einzugszone 60 bis zur Einzugsöffnung 56 radial und sichelförmig erweitert. Der erste Abschnitt 55 der Beruhigungszone ist nach radial einwärts begrenzt durch eine Leiste 51, welche sich aus der Unterseite der Platte 50 erhebt, die gleiche Krümmung aufweist wie die Platte 50 und in Umfangsrichtung bis etwa zum Anfang eines ersten Räumarmes 76 reicht. Der zweite Abschnitt 57 der Beruhigungszone erstreckt sich vom Beginn des ersten Räumarmes längs dessen Außenseite bis zum Anfang des zweiten Räumarmes 74, und der dritte Abschnitt 59 der Beruhigungszone reicht von der Außenseite des zweiten Räumarmes 74 bis zum Beginn des dritten Räumarmes 72, der teilweise vom Abschnitt 53 gebildet ist.

An der Stelle der größten radialen Erweiterung der Einzugszone 60 ist an der Unterseite der Platte 50 eine Rampe 58 ausgebildet, welche von der Unterkante des Anfangs des Steges 52 sowie von der Unterkante des radial weiter innen liegenden Endes des Abschnittes 53 bis zur Oberseite der Platte 50 ansteigt. In die im Wesentlichen ebene Rampe 58 ist die hier rechteckige Einzugsöffnung 56 eingeschnitten, und zwar ausgehend von der freien Unterkante der Rampe 58 bis zu einer vorgegebenen Höhe, die im allgemeinen kleiner ist als diejenige der Rampe 58. Ferner hat Einzugsöffnung 56 eine kleinere Breite als die Breite der Rampe 58 und ist zur Außenkante der Rampe 58 deutlich beabstandet.

Wie Figur 5 zeigt, die eine Ansicht der Unterseite der Platte 50 vom Boden 34 aus bei mit Schüttgut gefülltem Behälter und nach einer vollen Umdrehung der Platte 50 relativ zum Behälter 1 darstellt, liegt gemäß den punktierten Bereichen das Schüttgut nur in der Einzugszone 60 auf dem Boden 34 auf. Aus diesem Schüttgut nimmt die in Richtung 33 drehende Platte 50 durch die Einzugsöffnung 56 kontinuierlich einen Schüttgutstrang 40 auf, der von den Räumarmen 72, 74, 76, in die Entnahmeöffnung 45 und von dieser in die Abwurföffnung 7 gefördert wird.

Alle Räumarme erheben sich aus der Unterseite der Platte 50 in gleicher Höhe wie der Steg 52 und sein Abschnitt 53. Ferner haben sie alle gleiche Krümmung. Der dritte, von der Einzugsöffnung 56 am weitesten entfernte Räumarm 72 geht aus vom Steg 52, ist spiralig nach innen zur Mitte der Platte 50 gebogen und endet über der Entnahmeöffnung 45. Der Räumarm 72 ist bis zur Unterkante der Rampe 58 mit dem Abschnitt 53 gleich. Der zweite Räumarm 74 ist ebenfalls spiralig gebogen, endet ebenfalls über der Entnahmeöffnung 45 und beginnt mit einer Schneidkante 73, die bei einem Umfangswinkel von etwa 180° hinter der Einzugsöffnung 56 in einem Abstand radial innerhalb des Steges 52 angeordnet ist, wobei der Abstand etwa einem Drittel der Breite des Schüttgutstranges 40 plus dem Abstand des Stranges 40 vom Steg 52 entspricht. Der erste, der Einzugsöffnung am nächsten liegende Räumarm 76 endet ebenfalls über der Entnahmeöffnung 45, ist spiralig nach innen zur Mitte der Platte 50 gebogen und beginnt mit einer Schneidkante 75, welche bei einem Umfangswinkel von etwa 45° hinter der Einzugsöffnung 56 in einem Abstand vom Steg 52 angeordnet ist, der etwa zwei Drittel der Breite des Schüttgutstromes 40 plus dem Abstand des Stranges 40 vom Steg 52 entspricht.

Durch die beschriebene Anordnung der Räumarme 72, 74, 76 wird bei drehender Platte 50 der anfangs hinter der Einzugsöffnung 56 in den Abschnitt 55 eingezogene Schüttgutstrom 40 nacheinander in die drei Schüttgutteilstränge 42, 44, 46 aufgeteilt, die separat voneinander der Entnahmeöffnung 45 zugeführt werden. Durch die Anordnung und Gestaltung der Einzugsöffnung bleibt der Schüttgutstrang 40 von der drehenden Platte 50 hinreichend beabstandet, beispielsweise berührt er weder den Steg 52, noch die Leiste 51, noch die Unterseite der Platte 50. In dem ersten Abschnitt 55 der Beruhigungszone hat sich der eingezogene Schüttgutstrang 40 daher soweit beruhigt, das heißt Inhomogenitäten in seiner Zusammensetzung, abgebaut, dass jedenfalls etwa das innere Drittel 46 des Stranges 40 als beruhigt gelten kann, Daher kann zunächst dieses Drittel 46 von dem ersten Räumarm 76 zur Entnahmeöffnung 45 gefördert werden. Der Räumarm 76 wird daher nur von einem Teil des Stranges 40 beladen, so dass eine erneute Verdichtung des Teilstranges 46 wenn überhaupt dann jedenfalls sehr gering ist.

Nach Abtrennung des ersten Drittels beruhigt sich der Reststrang vor allem an seinem Rand in dem zweiten Abschnitt 57 der Beruhigungszone weiter, so dass das zweite Drittel 44 des Stranges 40 vom zweiten Räumarm 74 zur Entnahmeöffnung gefördert werden kann. Nach weiterer Beruhigung des Restdrittels 42 des Schüttgutstranges 40 in dem dritten Abschnitt 59 der Beruhigungszone kann dieses vom dritten Räumarm 72 gefördert werden. Die einzelnen Abschnitte 55, 57 und 59 der Beruhigungszone enden jeweils dort, wo der betreffende Räumarm 76, 74, 72 gegen den jeweiligen Schüttgutstrang anläuft und damit das Fördern desselben zur Entnahmeöffnung 45 beginnt. Man erkennt das hier realisierte Konzept, wonach der eingezogene Schüttgutstrang 40 zuerst in den Abschnitten 55, 57, 59 der Beruhigungszone beruhigt und erst danach zur Entnahmeöffnung 45 durch den oder die Räumarme gefördert wird. Die Erfindung kann selbstverständlich auch mit nur einem Räumarm, etwa dem Räumarm 72 ausgeführt werden, wobei dann die Beruhigungszone entsprechend verlängert ist.

Die Unterteilung des Schüttgutstranges 40 in die Teilstränge 46, 44, 42 hat auch den Zweck, die Beladung der einzelnen Räumarme 76, 74, 72 und damit eine mögliche erneute Schüttgutverdichtung nach der Beruhigung möglichst klein zu halten. Im Übrigen sind die Förderstrecken für den Strang 40 und die Teilstränge 42, 44, 46 so kurz wie möglich ausgeführt, um eine erneute Verdichtung des Schüttgutes während seiner Förderung so klein wie möglich zu halten. Die minimale Länge der Förderstrecke ist bestimmt durch den Abstand des äußeren Randes des Stranges 40 vom Beginn der Entnahmeöffnung 45. Daher kann der Durchmesser der kreisrunden Entnahmeöffnung 45 abweichend von den Figuren auch wesentlich größer gewählt werden, wobei dann die Räumarme sich geradlinig zur Entnahmeöffnung erstrecken können..

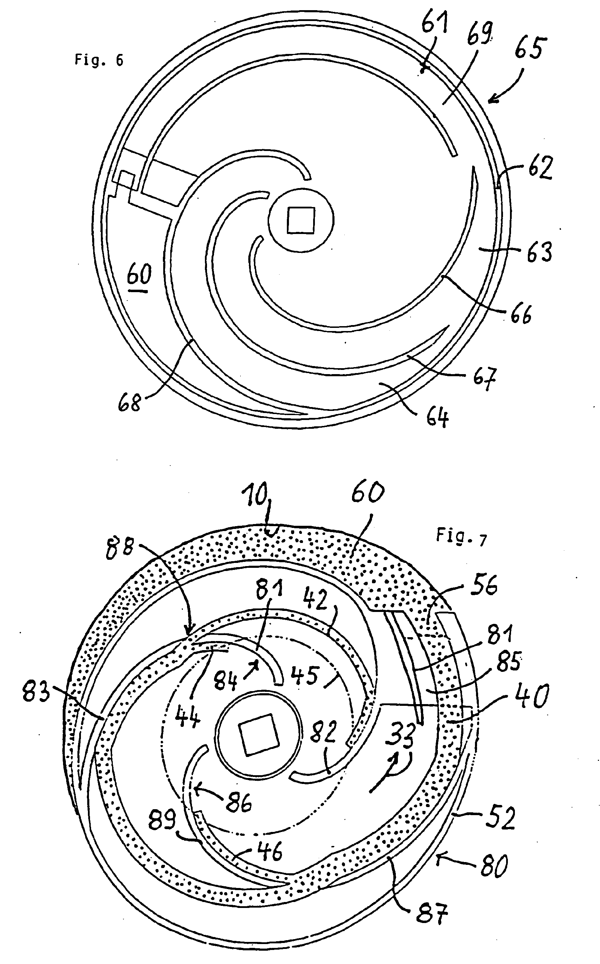

Die Platte 65 gemäß Figur 6 unterscheidet sich von der Platte 50 zunächst dadurch, dass sie insgesamt kreisrund ist. Demzufolge läuft der Randsteg 62 ganz um den Umfang der Platte 65 um. Ferner ist der erste Abschnitt 69 der Beruhigungszone für den Strang 40 wesentlich länger bis etwa 150° hinter der Einzugsöffnung 56 Die in Umfangsrichtung nachfolgenden Abschnitte 63, 64 der Beruhigungszone sind entsprechend kürzer ausgeführt. Die Leiste 61 hat eine entsprechende Länge. Die Einzugszone 60 ist hier durch einen Durchbruch in der Platte 65 geschaffen, so dass die Einzugszone 60 durch einen Teil des Randsteges 62 nach außen begrenzt ist. Wie man ferner aus Figur 6 erkennt, enden die drei Räumarme 66, 67, 68 nicht mehr in gleichen Umfangsabständen über der Entnahmeöffnung.

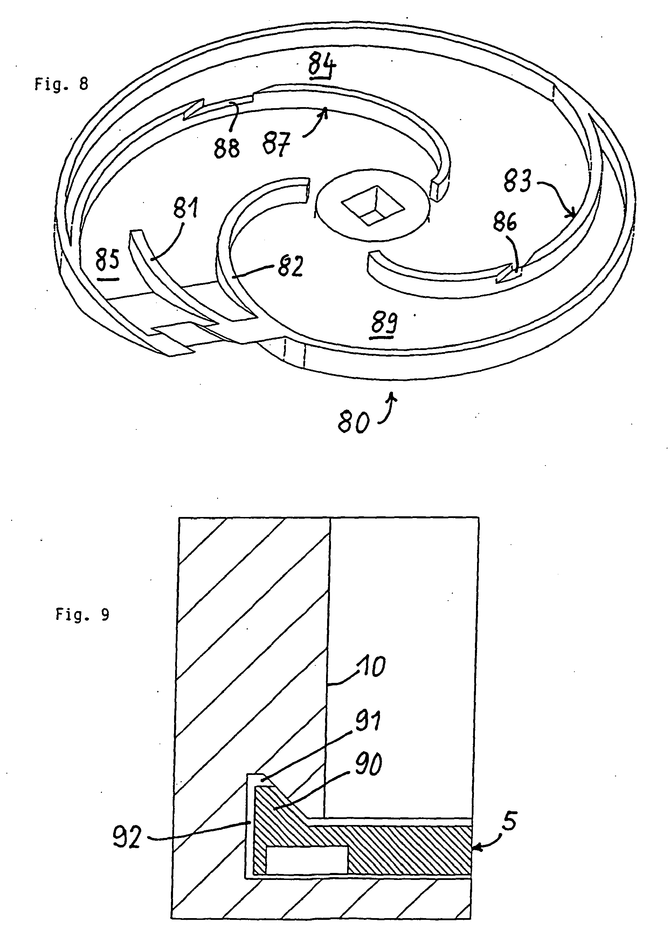

Die Platte 80 unterscheidet sich gemäß Figur 7 und 8, von denen die Figur 7 die gleiche Ansicht zeigt wie Figur 5, von der Platte 50 durch eine andere Gestaltung der Räumarme. Gleiche Teile wir in Figur 5 sind mit gleichen Bezugszeichen versehen. Der erste Räumarm 87 hat etwa in der Mitte seiner Längserstreckung eine Öffnung 88, die von der freien Unterseite des Räumarmes 87 ausgeht und etwa die Breite des Stranges 40 hat. Ebenso hat der in Umfangsrichtung nachfolgende Räumarm 83 etwa im letzten Drittel seiner Längserstreckung eine Öffnung 86, die von der freien Unterseite des Räumarmes 83 ausgeht und eine etwa kleinere Breite hat als die Öffnung 88.

Der durch die Einzugsöffnung 56 eingezogene Strang 40 kann sich in dem ersten Abschnitt 85 der Beruhigungszone, der nach innen durch die Leiste 81 begrenzt ist, entspannen, bis er vom ersten Räumarm 87 nach innen geschoben oder gefördert wird. Während dieses Fördems baut sich der Strang normalerweise an Höhe auf, von der die Öffnung 88 den oberen Teil 46 abnimmt und den unteren Teil des Stranges 40 in den nachfolgenden Abschnitt 84 der Beruhigungszone passieren lässt, während der abgenommene Strangteil 46 vom ersten Räumarm 87 weiter zur Entnahmeöffnung 45 gefördert wird. Der untere Strangteil kann sich in dem Abschnitt 84 weiter beruhigen, bis er vom zweiten Räumarm 83 noch weiter nach innen geschoben wird. Die sich hierbei wieder aufbauende Höhe wird durch die Öffnung 86 abgenommen und vom zweiten Räumarm 83 als Strangteil 44 zur Entnahmeöffnung 45 gefördert. Der die Öffnung 86 passierende Strangteil 42 kann sich in dem Abschnitt 89 der Beruhigungszone wieder entspannen und vom dritten Räumarm 82 zur Entnahmeöffnung 45 gefördert werden.

Der Wirkungsgrad des Förderprinzips hängt wesentlich von den Reibungsverhältnissen des Schüttgutes zu den Räumarmen und zu dem Boden 34 ab. Dazu ist die mit dem Schüttgutstrang in Berührung geratende Oberfläche der Räumarme glatt ausgeführt. Zur Erhöhung des Reibungswiderstandes des Schüttgutes zum Boden 34 ist dieser profiliert ausgeführt, um ein Mitdrehen des Stranges 40 mit dem Trennelement 5 zu vermeiden. Eine maktroskopische Profilierung sieht beispielsweise zweckmäßig radial angeordnete Noppen oder Rillen auf. Eine mikroskopische Profilierung kann etwa durch Beizen oder Sandstrahlen sowie durch Aufbringen von Beschichtungen erreicht werden. Dazu erweist es sich insgesamt als zweckmäßig, den Boden 34 von dem Behälter abmontierbar zu gestalten, wodurch seine Reinigung vereinfacht und eine Auswahl eines für das jeweilige Schüttgut am besten geeigneter Bodens erreicht wird. Zu Erhöhung der Absperrwirkung gegen eintretendes Schüttgut kann der Boden 34 mittels vorgespannter Elemente wie beispielsweise Federn oder Elastomere gegen den Steg 52 der Platte 50 von unten angepresst werden.

Hierzu dienen verschleißfeste Werkstoffe wie etwa Keramik.

Figur 9 zeigt eine ergänzende oder alternative Möglichkeit zur Verbesserung der Absperrwirkung. Am Rand des Trennelementes 5 kann aus dessen Oberseite ein zweckmäßig nach schräg außen ansteigendes, um das Trennelement 5 umlaufendes Profil 90 ausgebildet sein, welches in einen umlaufenden Hinterschnitt 91 am unteren Ende der Behälterinnenwand 10 eingreift. Der Rand des Trennelementes 5 erstreckt sich dann in einen Ausschnitt 92 in der Behälterinnenwand 10. Durch diese Maßnahme ist für das Schüttgut ein Labyrinth geschaffen, welches einen Durchtritt des Schüttgutes an dem Trennelement 5 vorbei in die Entnahmeöffnung verhindert.

Zu der beschriebenen Vorrichtung gehört ferner ein Regler 8, der den Antrieb und die Drehzahl des Motors 4 steuert. Die Waage, auf der der Behälter 1 ruht, weist Wägezellen beispielsweise in Form von Dehnungsmeßstreifen 2, 32 auf, deren das Behältergewicht repräsentierende Ausgangssignale über die Leitung X einem Regelereingang zugeführt werden. Im Regler 8 werden diese Ausgangssignale mit von einem Zeitglied gelieferten Zeitsignalen kombiniert. Das sich ergebende Kombinationssignal repräsentiert die aktuelle Ist-Austragsleistung an Schüttgut durch die Vorrichtung in Form der jeweiligen Gewichtsabnahme pro Zeiteinheit. Im Regler 8 wird ferner das Kombinationssignal mit einem auf Leitung M bereitgestellten Sollsignal verglichen, welches die jeweils gewünschte Austragsleistung darstellt. Aus dem Vergleich ergibt sich das Stellsignal für die Drehzahl des Motors 4, das diesem über Leitung Y zugeleitet wird, da die Austragsleistung annähernd proportional zur Drehzahl ist. Die Drehzahl des Trennelementes unterliegt keinen funktionalen Beschränkungen. Für viele Anwendungsfälle empfiehlt sich eine Drehzahl zwischen etwa 0,5 UpM und etwa 10 UpM.

Das Ausgangssignal aus den Wägezellen (Dehnungsmeßstreifen 2, 32) wird ferner einem Stellmotor 24 zugeführt, und zwar über eine nicht dargestellte Vergleichseinrichtung. In dieser sind zwei je nach Art des Schüttgutes einstellbare Parameter gespeichert, nämlich einerseits das Mindestgewicht des gefüllten Behälters, das nicht unterschritten werden sollte, und andererseits das Maximalgewicht des Behälters 1, das nicht überschritten werden sollte. Erreicht das Ausgangssignal aus den Wägezellen das Mindestgewicht, veranlasst die Vergleichseinrichtung den Stellmotor 24, die Füllklappe 23 zu öffnen, so dass der Behälter 1 mit Schüttgut beladen wird. Erreicht das genannte Ausgangssignal das Maximalgewicht, schließt der Stellmotor 24 die Füllklappe 23.

Zur Dosierung bestimmter Schüttgüter kann es sich als vorteilhaft erweisen, wenn die Oberfläche des Trennelementes 5 nicht plan sondern erhaben konisch geformt, die Oberseite des Trennelementes 5 also nach radial außen hin abfallend gestaltet ist. Dadurch wird der Schüttgutfluß von innen nach radial außen zur Einzugszone 60 und zur Einzugsöffnung 56 und damit eine Restlosentleerung des Behälters 1 unterstützt. Der Konus kann ein von dem Trennelement 5 getrenntes Bauteil sein, welches stationär über dem Trennelement angeordnet und durch radiale Streben mit dem Behälter 1 verbunden ist.

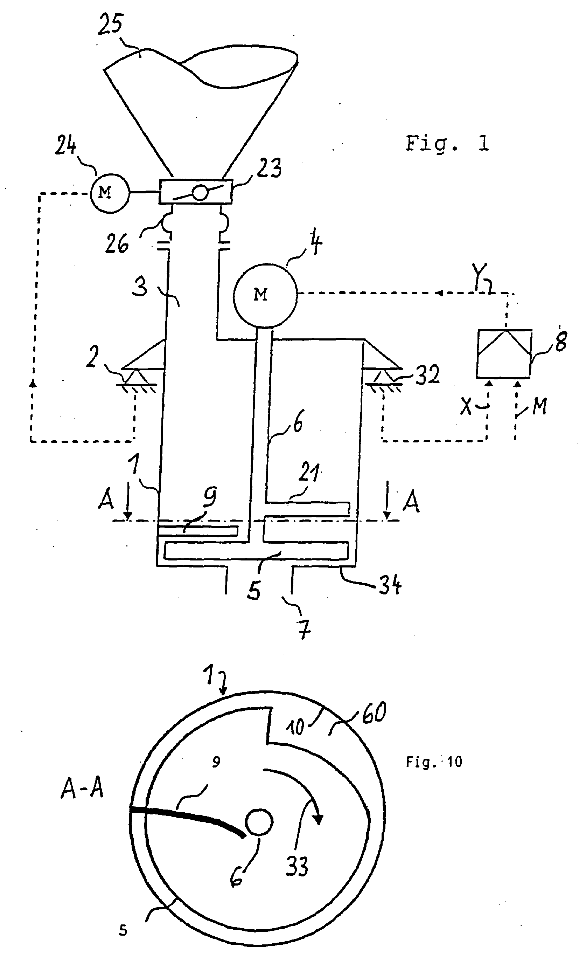

In ergänzender Ausgestaltung der Erfindung ist der Behälter 1 gemäß Figur 10 oberhalb des Trennelementes 5 mit einem stationären Stator 9 ausgerüstet, der ein Mitdrehen des Schüttgutes mit dem Trennelement zumindest erschwert und günstigstenfalls verhindert und die Restlosentleerung des Behälters unterstützt. Ist der Konus ein separates Bauteil, können die Streben die Funktion des Stators übernehmen, der dann entfallen kann. Wie Figur 10 veranschaulicht, reicht der Stator 9 radial etwa bis zur Drehachse des Trennelementes 5 und ist gegebenenfalls leicht gegen die Drehrichtung des Trennelementes gebogen und fördert dadurch innenliegendes Schüttgut nach radial außen zur Einzugszone 60. Weiterhin kann es Vorteile bringen, wenn oberhalb des Stators 9 mindestens ein mit der Abtriebswelle 6 gekoppeltes, sich radial erstreckendes Rührelement 21 vorgesehen ist, welches den Schüttgutfluß unterstützt.

In einer vereinfachten Ausführungsform der Erfindung kann auf den Regler verzichtet werden. In diesem Fall wird ein Konstantes Stellsignal auf den Motor 4 gegeben, so dass sich eine spezifische, der Motordrehzahl annähernd proportionale Austragsleistung einstellt.

Selbstverständlich kommt es für die Erfindung für den Antrieb des Trennelementes nur auf dessen Drehung relativ zum Behälter an. Daher liegt es im Rahmen der Erfindung, das Trennelement statisch zu befestigen und den Behälter etwa mittels der Abtriebswelle 6 zu drehen.

## Patentansprüche

1. Vorrichtung zur dosierten Entnahme von Schüttgut aus einem Behälter (1), der eine obere Schüttgut-Einfüllöffnung (3) und eine untere Schüttgut-Entnahmeöffnung (45) aufweist, mit einem Rotor, der mit wenigstens einem im Inneren des Behälters (1) nahe dessen rotationssymmetrischen Boden (34) angeordneten, zur Entnahmeöffnung (45) gerichteten Räumarm antriebsmäßig verbunden ist wobei der Räumarm an der Unterseite eines mit dem Rotor antriebsverbundenen Trennelementes (5) befestigt ist, **dadurch gekennzeichnet, dass** unterhalb des Trennelementes (5) vor dem Räumarm eine Beruhigungszone vorgesehen ist, die einerseits zum Schüttgut nur über eine Einzugsöffnung (56) und andererseits zur Entnahmeöffnung (45) offen ist.

2. Vorrichtung nach Anspruch 1, **dadurch gekennzeichnet, dass** die Einzugsöffnung (56) an dem Trennelement (5) ausgebildet ist und/oder, dass ein auf dem Boden (34) liegender und unter das drehende Trennelement eingezogener Schüttgutstrang (40) zu dem Trennelement (5) Abstand aufweist und/oder, dass das Trennelement (5) eine sich im Wesentlichen quer zur Mittellinie des Behälters erstreckende Platte (50) ist, an welcher die Einzugsöffnung (56) ausgebildet ist und/oder, dass die wirksame Fläche der Einzugsöffnung (56) sich im Wesentlichen parallel zur Drehachse des Trennelementes (5) erstreckt.

3. Vorrichtung nach einem der vorstehenden Ansprüche, **dadurch gekennzeichnet, dass** vor der Einzugsöffnung (45) eine Einzugszone (60) ausgebildet ist.

4. Vorrichtung nach einem der vorstehenden Ansprüche, **dadurch gekennzeichnet, dass** das Trennelement (5) längs seines Umfangs einen sich nach unten bis zum Boden (34) erstreckenden Steg (52, 62) aufweist.

5. Vorrichtung nach Anspruch 4, **dadurch gekennzeichnet, dass** die Einzugszone (60) durch einen Durchbruch durch die Oberseite des Trennelementes (5) umgrenzt ist.

6. Vorrichtung nach Anspruch 3 oder 4, **dadurch gekennzeichnet, dass** der Umfang des Trennelementes (5) längs der Einzugszone (60) nach radial innen versetzt ist.

7. Vorrichtung nach einem der vorstehenden Ansprüche, **dadurch gekennzeichnet, dass** der zur Einzugsöffnung (56) in Umfangsrichtung entfernte Räumarm (66, 67, 68) einenends an der Entnahmeöffnung (45) endet und andernends in den Steg (62) übergeht.

8. Vorrichtung nach Anspruch 7, **dadurch gekennzeichnet, dass** wenigstens ein Abschnitt (63, 64, 69) des spiraligen Räumarms einen Teil des Steges (62) bildet.

9. Vorrichtung nach Anspruch 8, **dadurch gekennzeichnet, dass** der Abschnitt des Räumarmes die Einzugszone (60) begrenzt.

10. Vorrichtung nach einem der vorstehenden Ansprüche, **dadurch gekennzeichnet, dass** das Trennelement (5) eine von seinem unteren Ende ansteigende Rampe (58) aufweist, in der die Einzugsöffnung (56) ausgebildet ist.

11. Vorrichtung nach Anspruch 10, **dadurch gekennzeichnet, dass** die Einzugsöffnung (56) innerhalb der Breite der Rampe (58) ausgebildet ist.

12. Vorrichtung nach Anspruch 11, **dadurch gekennzeichnet, dass** die Rampe (58) eine größere Höhe hat als die Einzugsöffnung (56).

13. Vorrichtung nach einem der vorstehenden Ansprüche, **dadurch gekennzeichnet, dass** an der Unterseite des Trennelementes (5) weitere Räumarme (66, 67, 68) befestigt sind, die in Umfangsrichtung Abstand voneinander haben und mit unterschiedlichem radialen Abständen vor dem Steg (62) beginnen.

14. Vorrichtung nach Anspruch 13, **dadurch gekennzeichnet, dass** vor jedem Räumarm (66, 67, 68) je ein Abschnitt (63, 64, 69) der Beruhigungszone ausgebildet ist.

15. Vorrichtung nach Anspruch 14, **dadurch gekennzeichnet, dass** die Abschnitte in Umfangsrichtung unterschiedliche Länge haben.

16. Vorrichtung nach einem der Ansprüche 13 bis 15, **dadurch gekennzeichnet, dass** die Enden der Räumarme (66, 67, 68) an der Entnahmeöffnung (45) mit untereinander gleichem Umfangsabständen enden.

17. Vorrichtung nach einem der Ansprüche 13 bis 16, **dadurch gekennzeichnet, dass** der oder die Räumarme (66, 67, 68) geradlinig auf die Entnahmeöffnung (45) zu gerichtet sind.

18. Vorrichtung nach einem der Ansprüche 13 bis 16, **dadurch gekennzeichnet, dass** die Räumarme (66, 67, 68) Spiralform haben.

19. Vorrichtung nach Anspruch 18, **dadurch gekennzeichnet, dass** die Räumarme (66, 67, 68) gleiche Krümmung haben.

20. Vorrichtung nach einem der Ansprüche 13 bis 19, **dadurch gekennzeichnet, dass** wenigstens einige der weiteren Räumarme nach teilweisem einwärts Fördern des Schüttgutstranges je eine Öffnung (86, 88) aufweisen, welche einen Teil des Stranges abweist und zur Entnahmeöffnung fördern lässt und den restlichen Teil passieren läßt.

21. Vorrichtung nach einem der vorstehenden Ansprüche, **dadurch gekennzeichnet, dass** sich aus der Oberseite des Trennelementes (5) längs dessen Rand ein umlaufendes Profil erhebt, welches in einen umlaufenden Hinterschnitt in der Behälterinnenwand (10) zur Schaffung eines den Durchtritt des Schüttgutes verhindernden Labyrinths eingreift, und/oder, dass elastische Elemente wie etwa Federn vorgesehen sind, welche den Boden (34) gegen den oder die Räumarme und den Steg drücken und/oder, dass die Oberfläche des Trennelementes mit (5) einer Antihaftbeschichtung versehen ist und/oder, dass die Oberseite des Trennelementes nach außen abfallend nach Art eines Konus gestaltet ist und/oder, dass der Boden des Behälters (34) lösbar am Behälter (1) befestigt ist und/oder, dass der Boden entsprechend der Art des Schüttgutes profiliert ist.

22. Vorrichtung nach einem der vorstehenden Ansprüche, **dadurch gekennzeichnet, dass** oberhalb des Trennelementes (5) ein mit dem Behälter (1) verbundener und sich radial erstreckender Stator (9) vorgesehen ist.

23. Vorrichtung nach Anspruch 15, **dadurch gekennzeichnet, dass** der Stator (9) sich horizontal und ungefähr bis zur Drehachse erstreckt.

24. Vorrichtung nach Anspruch 15 oder 16, **dadurch gekennzeichnet, dass** der Stator (9) gebogen ist.

25. Vorrichtung nach einem der Ansprüche 22 - 24, **dadurch gekennzeichnet, dass** oberhalb des Trennelementes (5) ein separater Konus vorgesehen ist, der über radiale Streben mit der Behälterwand (10) verbunden ist.

26. Vorrichtung nach Anspruch 22 oder 23, **dadurch gekennzeichnet, dass** oberhalb des Stators (9) oder oberhalb des Konus ein mit dem Trennelement (5) mitdrehendes Rührelement (21) vorgesehen ist.

27. Vorrichtung nach Anspruch 19, **dadurch gekennzeichnet, dass** sich das stabförmige Rührelement (21) radial erstreckt.

28. Vorrichtung nach einem der vorstehenden Ansprüche, **dadurch gekennzeichnet, dass** der Behälter auf einer Wägezellen (2, 32) aufweisenden Waage ruht und/oder, dass in einem Regler aus einem von den Wägezellen empfangenen Signal und einem Zeitglied ein Ist-Austragsleistungsignal mit einem vorgegebenen Soll-Austragssignal verglichen und aus dem Vergleich ein Stellsignal für die Drehzahl des Antriebsmotors (4) für das Trennelement (5) oder den Behälter (1) gebildet wird und/oder, dass eine am Behälter (1) angebrachte Füllklappe (23) von einem Stellmotor (24) gesteuert wird, welcher Signale aus den Wägezellen (2, 32) aufnimmt.

## Claims

1. Device for the metered removal of bulk material from a container (1) which comprises an upper bulk material-filling opening (3) and a lower bulk material-removal opening (45), having a rotor which is drivingly connected to at least one sweeping arm which is disposed on the inside of the container (1) near to its rotationally symmetrical base (34) and is directed towards the removal opening (45), wherein the sweeping arm is attached to the underside of a separating element (5) which is drivingly connected to the rotor, **characterised in that** a settling zone is provided below the separating element (5) in front of the sweeping arm and the settling zone is open on the one hand to the bulk material only via a feed opening (56) and on the other hand is open to the removal opening (45).

2. Device as claimed in claim 1, **characterised in that** the feed opening (56) is formed on the separating element (5), and/or a bulk material strand (40) lying on the base (34) and fed in bellow the rotating separating element is spaced apart from the separating element (5), and/or the separating element (5) is a plate (50) which extends substantially transversely with respect to the centre line of the container and on which the feed opening (56) is formed, and/or the effective surface of the feed opening (56) extends substantially in parallel with the rotational axis of the separating element (5).

3. Device as claimed in any one of the preceding claims, **characterised in that** a feed zone (60) is formed in front of the feed opening (45).

4. Device as claimed in any one of the preceding claims, **characterised in that** the separating element (5) comprises along its circumference a web (52, 62) which extends downwards to the base (34).

5. Device as claimed in claim 4, **characterised in that** the feed zone (60) is defined by an opening through the top side of the separating element (5).

6. Device as claimed in claim 3 or 4, **characterised in that** the circumference of the separating element (5) is offset radially inwards along the feed zone (60).

7. Device as claimed in any one of the preceding claims, **characterised in that** the sweeping arm (66, 67, 68) which is located at a distance from the feed opening (56) in the circumferential direction terminates at one end at the removal opening (45) and merges at the other end into the web (62).

8. Device as claimed in claim 7, **characterised in that** at least one portion (63, 64, 69) of the spiral sweeping arm forms part of the web (62).

9. Device as claimed in claim 8, **characterised in that** the portion of the sweeping arm delimits the feed zone (60)

10. Device as claimed in any one of the preceding claims, **characterised in that** the separating element (5) comprises a ramp (58) which rises from its lower end and in which the feed opening (56) is formed.

11. Device as claimed in claim 10, **characterised in that** the feed opening (56) is formed within the width of the ramp (58).

12. Device as claimed in claim 11, **characterised in that** the ramp (58) is of a greater height than the feed opening (56).

13. Device as claimed in any one of the preceding claims, **characterised in that** further sweeping arms (66, 67, 68) are attached to the underside of the separating element (5) and are spaced apart from one another in the circumferential direction and begin with different radial spaced intervals in front of the web (62).

14. Device as claimed in claim 13, **characterised in that** a respective portion (63, 64, 69) of the settling zone is formed in front of each sweeping arm (66, 67, 68).

15. Device as claimed in claim 14, **characterised in that** the portions are of different lengths in the circumferential direction.

16. Device as claimed in any one of claims 13 to 15, **characterised in that** the ends of the sweeping arms (66, 67, 68) terminate at the removal opening (45) with mutually identical circumferential spaced intervals.

17. Device as claimed in any one of claims 13 to 16, **characterised in that** the sweeping arm(s) (66, 67, 68) is/are directed in a linear manner towards the removal opening (45).

18. Device as claimed in any one of claims 13 to 16, **characterised in that** the sweeping arms (66, 67, 68) have a spiral shape.

19. Device as claimed in claim 18, **characterised in that** the sweeping arms (66, 67, 68) have the same curvature.

20. Device as claimed in any one of claims 13 to 19, **characterised in that** after partial inwards conveyance of the bulk material strand at least some of the further sweeping arms have a respective opening (86, 88) which deflects part of the strand and causes it to be conveyed to the removal opening and allows the remaining part to pass.

21. Device as claimed in any one of the preceding claims, **characterised in that** a circumferential profile rises from the top side of the separating element (5) along its edge, said profile engaging into a circumferential undercut in the container inner wall (10) to create a labyrinth which prevents the passage of the bulk material, and/or elastic elements such as springs are provided which urge the base (34) against the sweeping arm(s) and the web, and/or the surface of the separating element (5) is provided with an anti-adhesive coating, and/or the top side of the separating element is configured so as to be outwardly tapering in the manner of a cone, and/or the base of the container (34) is releasably attached to the container (1), and/or the base is profiled according to the type of bulk material.

22. Device as claimed in any one of the preceding claims, **characterised in that** a stator (9) which is connected to the container (1) and extends in a radial manner is provided above the separating element (5).

23. Device as claimed in claim 15, **characterised in that** the stator (9) extends horizontally and approximately to the rotational axis.

24. Device as claimed in claim 15 or 16, **characterised in that** the stator (9) is curved.

25. Device as claimed in any one of claims 22 - 24, **characterised in that** a separate cone which is connected by radial braces to the container wall (10) is provided above the separating element (5).

26. Device as claimed in claim 22 or 23, **characterised in that** an agitating element (21) which rotates simultaneously with the separating element (5) is provided above the stator (9) or above the cone.

27. Device as claimed in claim 19, **characterised in that** the rod-shaped agitating element (21) extends radially.

28. Device as claimed in any one of the preceding claims, **characterised in that** the container rests on scales comprising weighing cells (2, 32), and/or an actual discharge rate signal from a signal, which is received from the weighing cells, and from a timing element is compared in a regulator to a specified desired discharge signal, and a control signal for the rotational speed of the drive motor (4) for the separating element (5) or the container (1) is formed from the comparison, and/or a filling flap (23) attached to the container (1) is controlled by an actuator (24) which receives signals from the weighing cells (2, 32).

## Revendications

1. Dispositif pour le prélèvement dosé de produits en vrac dans un récipient (1), qui présente une ouverture supérieure de versement de produit en vrac (3) et une ouverture inférieure de prélèvement de produit en vrac (45), comprenant un rotor, qui est relié au niveau entraînement à au moins un bras de déblaiement disposé à l'intérieur du récipient (1) à proximité de son fond (34) symétrique en rotation et orienté vers l'ouverture de prélèvement (45), le bras de déblaiement étant fixé sur le côté inférieur d'un élément de séparation (5) relié au niveau entraînement au rotor, **caractérisé en ce qu'**il est prévu au-dessous de l'élément de séparation (5) avant le bras de déblaiement une zone de stabilisation, qui est ouverte d'une part en direction des produits en vrac uniquement par une ouverture d'alimentation (56) et d'autre part en direction de l'ouverture de prélèvement (45).

2. Dispositif selon la revendication 1, **caractérisé en ce que** l'ouverture d'alimentation (56) est réalisée sur l'élément de séparation (5) et/ou **en ce qu'**une branche de produits en vrac (40) située sur le fond (34) et rentrée sous l'élément de séparation rotatif présente une distance à l'élément de séparation (5) et/ou **en ce que** l'élément de séparation (5) est une plaque (50) s'étendant sensiblement transversalement à la ligne médiane du récipient, sur laquelle l'ouverture d'alimentation (56) est réalisée et/ou en ce que la surface efficace de l'ouverture d'alimentation (56) s'étend sensiblement parallèlement à l'axe de rotation de l'élément de séparation (5).

3. Dispositif selon l'une quelconque des revendications précédentes, **caractérisé en ce qu'**une zone d'alimentation (60) est réalisée avant l'ouverture d'alimentation (45).

4. Dispositif selon l'une quelconque des revendications précédentes, **caractérisé en ce que** l'élément de séparation (5) présente le long de son pourtour une barrette (52, 62) s'étendant vers le bas jusqu'au fond (34).

5. Dispositif selon la revendication 4, **caractérisé en ce que** la zone d'alimentation (60) est délimitée par un percement à travers le côté supérieur de l'élément de séparation (5).

6. Dispositif selon la revendication 3 ou 4, **caractérisé en ce que** le pourtour de l'élément de séparation (5) est décalé le long de la zone d'alimentation (60) radialement vers l'intérieur.

7. Dispositif selon l'une quelconque des revendications précédentes, **caractérisé en ce que** le bras de déblaiement (66, 67, 68), éloigné de l'ouverture d'alimentation (56) dans le sens périphérique, se termine par une extrémité sur l'ouverture de prélèvement (45) et fait place sur l'autre extrémité à la barrette (62).

8. Dispositif selon la revendication 7, **caractérisé en ce qu'**au moins une partie (63, 64, 69) du bras de déblaiement en spirale forme une partie de la barrette (62).

9. Dispositif selon la revendication 8, **caractérisé en ce que** la partie du bras de déblaiement délimite la zone d'alimentation (60).

10. Dispositif selon l'une quelconque des revendications précédentes, **caractérisé en ce que** l'élément de séparation (5) présente une rampe (58) croissant à partir de son extrémité inférieure, dans laquelle l'ouverture d'alimentation (56) est réalisée.

11. Dispositif selon la revendication 10, **caractérisé en ce que** l'ouverture d'alimentation (56) est réalisée à l'intérieur de la largeur de la rampe (58).

12. Dispositif selon la revendication 11, **caractérisé en ce que** la rampe (58) a une hauteur supérieure à l'ouverture d'alimentation (56).

13. Dispositif selon l'une quelconque des revendications précédentes, **caractérisé en ce que** sur le côté inférieur de l'élément de séparation (5) sont fixés d'autres bras de déblaiement (66, 67, 68), qui sont espacés les uns des autres dans le sens périphérique et démarrent avec différents espacements radiaux en amont de la barrette (62).

14. Dispositif selon la revendication 13, **caractérisé en ce que** devant chaque bras de déblaiement (66, 67, 68) est réalisée une partie (63, 64, 69) de la zone de stabilisation.

15. Dispositif selon la revendication 14, **caractérisé en ce que** les parties ont une longueur différente dans le sens périphérique.

16. Dispositif selon l'une quelconque des revendications 13 à 15, **caractérisé en ce que** les extrémités des bras de déblaiement (66, 67, 68) se terminent sur l'ouverture de prélèvement (45) avec des espacements périphériques identiques entre eux.

17. Dispositif selon l'une quelconque des revendications 13 à 16, **caractérisé en ce que** le ou les bras de déblaiement (66, 67, 68) sont dirigés en ligne droite en direction de l'ouverture de prélèvement (45).

18. Dispositif selon l'une quelconque des revendications 13 à 16, **caractérisé en ce que** les bras de déblaiement (66, 67, 68) ont une forme de spirale.

19. Dispositif selon la revendication 18, **caractérisé en ce que** les bras de déblaiement (66, 67, 68) ont une courbure identique.

20. Dispositif selon l'une quelconque des revendications 13 à 19, **caractérisé en ce qu'**au moins certains des autres bras de déblaiement présentent chacun, après un avancement partiel vers l'intérieur de la branche de produit en vrac, une ouverture (86, 88) qui dévie une partie de la branche et la fait avancer vers l'ouverture de prélèvement et laisse passer la partie restante.

21. Dispositif selon l'une quelconque des revendications précédentes, **caractérisé en ce qu'**un profil périphérique s'élève à partir du côté supérieur de l'élément de séparation (5) le long de son bord, lequel profil s'engage dans une contre-dépouille périphérique dans la paroi intérieure de récipient (10) pour créer un labyrinthe empêchant le passage du produit en vrac, et/ou en ce que des éléments élastiques tels que par exemple des ressorts sont prévus, lesquels pressent le fond (34) contre le ou les bras de déblaiement et la barrette et/ou la surface de l'élément de séparation est dotée d'un revêtement anti-adhérent (5) et/ou **en ce que** le côté supérieur de l'élément de séparation est conçu à la façon d'un cône en descendant vers l'extérieur et/ou **en ce que** le fond du récipient (34) est fixé de façon amovible sur le récipient (1) et/ou **en ce que** le fond est profilé en fonction de la nature du produit en vrac.

22. Dispositif selon l'une quelconque des revendications précédentes, **caractérisé en ce qu'**un stator (9) relié au récipient (1) et s'étendant radialement est prévu au-dessus de l'élément de séparation (5).

23. Dispositif selon la revendication 15, **caractérisé en ce que** le stator (9) s'étend horizontalement et à peu près jusqu'à l'axe de rotation.

24. Dispositif selon la revendication 15 ou 16, **caractérisé en ce que** le stator (9) est plié.

25. Dispositif selon l'une quelconque des revendications 22 à 24, **caractérisé en ce qu'**il est prévu au-dessus de l'élément de séparation (5) un cône séparé qui est relié par des entretoises radiales à la paroi du récipient (10).

26. Dispositif selon la revendication 22 ou 23, **caractérisé en ce qu'**un élément agitateur (21) tournant en même temps que l'élément de séparation (5) est prévu au-dessus du stator (9) ou au-dessus du cône.

27. Dispositif selon la revendication 19, **caractérisé en ce que** l'élément agitateur (21) en forme de barre s'étend dans le sens radial.

28. Dispositif selon l'une quelconque des revendications précédentes, **caractérisé en ce que** le récipient repose sur une balance présentant des cellules de pesée (2, 32) et/ou **en ce que**, dans un régulateur, un signal de rendement d'évacuation réel est comparé avec un signal d'évacuation de consigne prédéfini à partir d'un signal reçu des cellules de pesée et d'un élément temporisé et un signal de commande pour le régime du moteur d'entraînement (4) pour l'élément de séparation (5) ou le récipient (1) est formé à partir de la comparaison et/ou **en ce qu'**un clapet de remplissage (23) placé sur le récipient (1) est commandé par un servomoteur (24) qui reçoit des signaux en provenance des cellules de pesée (2, 32).
